# EUROPEAN PATENT APPLICATION

(11) **EP 0 884 581 A1**
(43) Date of publication of application: **16.12.1998**
(21) Application number: 97109658.1
(22) Date of filing: 13.06.1997
(51) Int. Cl.: G01N 21/55

(54) **Optical sensor for detecting chemical substances dissolved or dispersed in water**

(71) Applicant: HOECHST AKTIENGESELLSCHAFT, 65929 Frankfurt am Main (DE)
(72) Inventor: Liu, Yuan Dr., 61440Oberursel (DE); Yamamoto, Hironobu, Sayama-shi Saitama (JP); Tagaya, Akihiro, Sayama-shi Saitama (JP)

(57) **Abstract**

A highly sensitive optical sensor for detecting a chemical substance dissolved or dispersed in water is provided. The optical sensor comprises a detecting element having a polymer thin film, a light source unit for emitting light for irradiating the polymer thin film, and a photo-detector for detecting the intensity of light reflected from the polymer thin film. The detecting element, the light source unit, and the photo-detector are integrally mounted in a housing. The polymer thin film is formed on a highly reflective substrate so as to interact with a chemical substance dissolved or dispersed in water flowing through a water channel.

## Description

### Background of the invention

### Field of the Invention

The present invention relates generally to an optical sensor and more particularly to an optical sensor which utilizes a polymer thin film for directly detecting a chemical substance dissolved or dispersed in water, particularly dissolved organic carbon (hereinafter abbreviated as "DOC") in accordance with an optical detecting method such as a waveguide mode method (WG method), surface plasma resonance method (SPR method), interference enhanced reflection method (IER method), and so on. The polymer thin film interacts with a chemical substance such as hydrocarbon and so on which may be absorbed into or adsorbed on the polymer thin film. As a result, the polymer thin film exhibits a change in thickness and/or refractive index depending on the concentration of the chemical substance, so that such a physical change may be measured by an optical method to determine the concentration of the chemical substance dissolved or dispersed in water, particularly, DOC.

### Description of the Related Art

The use of a polymer material as an optical sensor for detecting a chemical species in water has been reported in a large number of articles. Many of such reports relate to evanescent wave sensors utilizing optical fibers or optical waveguides.

Carter et al. disclose in USP No. Re.33064 a method of identifying a chemical species in a solvent using an optical waveguide covered with a response film having a refractive index smaller than that of the waveguide layer. Light propagates through the optical waveguide by the action of total internal reflection. Within the propagating light, evanescent waves generated by the total reflection only are involved in interaction of the response film with a chemical species under detection. Thus, the method proposed by Carter et al. is limited only on interaction which is accompanied with absorption or scattering of light, or generation of fluorescence.

Hinrich et al. have reported the use of polymer for detecting organic compounds in water on an internal reflection element in "Determination of organic compounds by IR/ATR spectroscopy with polymer-coated internal reflection elements" (Applied Spectroscopy, Vol. 44, No. 10, 1990, pp 1641 - 1646). However, the detecting method of Hinrich et al. relies on the absorption of evanescent waves of infrared rays penetrating in the polymer film by organic compounds, wherein the polymer film is used to eliminate water and extract the organic compounds on the surface of the internal reflection element to thereby enhance an absorption signal.

Burck et al. have reported a similar method except for the use of an optical fiber in "A fiber optic evanescent field absorption sensor for monitoring organic contamination in water" (Fresenius J. Anal. Chem., (1994), 342, pp 394 - 400) and "Fiber-optic evanescent wave sensor for in situ determination of non-polar organic compounds in water" (Sensors and Actuators, B 18 - 19 (1994), pp 291 - 295).

Japanese Laid-open Patent Application No. 7-85122 (1995) discloses a method for detecting an organic solvent in water with an optical fiber having a cladding layer made of a chitosan compound. Since the intensity of evanescent waves penetrating into the chitosan cladding layer depends on the degree of swelling, and the concentration of the chitosan cladding layer varies in accordance with the ratio of water to solvent, the intensity of light propagating the optical fiber is consequently a function of the concentration of organic solvent dissolved in water.

A main disadvantage of a sensor utilizing evanescent waves, however, is that the sensitivity of the sensor is limited since only a portion of incident light is used for detection. Thus, a long interaction distance is required to realize a sensor having a high sensitivity. This imposes a limit on reduction in size of such sensors.

A larger portion of incident light may be utilized for detection to provide sensors having higher sensitivities. WO95/20151 (international publication date: July 27, 1995) discloses a chemical sensor having a multi-layered optical fiber. Specifically, a sensing polymer layer is sandwiched between a core of the optical fiber and a cladding layer, and the refractive index of the polymer layer is larger than that of the cladding layer so that the polymer layer serves as an optical waveguide layer. With this structure, light incident to the optical fiber is refracted toward the polymer waveguide layer and propagates therethrough toward the end terminal of the sensor. However, since this structure requires an output light detector to be located near an output terminal, the chemical sensor disclosed in WO95/20151 is inconvenient for measuring a substance to be detected in water.

A large number of highly sensitive polymers for detecting chemical substances in gas have also been reported. Gliliani et al. have reported a strip-shaped polymer waveguide having a thickness of 1 µm for detecting the existence of several kinds of organic vapors in "Fabrication of an integrated optical waveguide chemical vapor microsensor by photopolymerization of a bifunctional oligomer" (Appl. Phys. Lett., 48 (1986), pp 1311 - 1313) and "Integrated optical chemical vapor microsensor" (Sensors and Actuators, 15 (1988), pp 25 - 31). A method proposed by them involves introducing non-polarized light into a waveguide channel from one end of an optical fiber by fiber coupling, and extracting the light propagating through the waveguide from the other end to the outside. In this way, interaction between the polymer and an organic vapor is sensed as a change in intensity of the transmitting (propagating) light. The method of Gluliani et al., however, implies the following two difficulties: (1) a photopolymerized polymer is required to fabricate the strip-shaped waveguide; and (2) the strip-shaped waveguide must be coupled by end-fire coupling to a thin film having a thickness on order of micrometers.

A planar polymer thin film optical waveguide as a sensor for detecting organic vapors has been reported by Bowman and Burgess in "Evaluation of polymer thin film waveguides as chemical sensors" (SPIE Proceedings, Vol. 1368: Chemical, biochemical, and environmental II, 1990). The polymer film exhibits a change in waveguide characteristic as a result of absorbing chemical vapors. Bowman et al. use two gratings (diffraction gratings) embedded in a substrate for coupling incident and decoupling light. Such a grating coupler, however, is difficult to fabricate and expensive. A similar method using a simpler prism coupler has been reported by Osterfeld et al. in "Optical gas detection using metal film enhanced leaky mode spectroscopy" (Appl. Phys. Lett. 62 (19), May 10, 1993, pp 2310 - 2312). A metal reflective layer is sandwiched between a polymer film waveguide and an optical coupling prism such that light incident to the interface between the metal reflective layer and the prism is totally reflected at an optimal incident angle. Evanescent waves produced by total reflection excite a waveguide mode in the polymer film.

Reference has not been made as to whether or not the polymer waveguides proposed by Bowman et al. and Osterfeld et al. can be used for detecting organic carbon in water. Further, since the polymer film (teflon AF) used by Osterfeld et al. has a refractive index (=1.3034) smaller than the refractive index (=1.33) of water, the film made of teflon AF does not function as a waveguide in water.

### Summary of the invention

The present invention has been made to solve the foregoing problems of the known techniques, and its object is to provide an optical sensor for detecting a chemical substance dissolved or dispersed in water, particularly DOC, which is simple in structure, highly sensitive, and easy to fabricate.

To achieve the above object, the present invention provides an optical sensor for directly detecting a chemical substance dissolved or dispersed in water comprising:
a detecting element having a polymer thin film capable of interacting with the chemical substance;
a light source unit for emitting light for irradiating the polymer thin film; and
a photo-detector for detecting the intensity of light reflected from the polymer thin film.

In the present invention, while the polymer thin film is capable of detecting any chemical substance which is absorbed or adsorbed thereby, the polymer thin film is preferably used to detect organic carbon in terms of the sensitivity and so on.

The detecting element, the light source unit, and the photo-detector are integrally supported by a housing. The polymer thin film provided in the detecting element is preferably formed on a planar substrate. In one embodiment of the present invention, the polymer thin film is formed on a highly reflective substrate, and interaction between the polymer thin film and the organic carbon in water is detected in accordance with an IER method. In another embodiment of the present invention, the polymer thin film is formed on a highly reflective metal layer deposited on a transparent substrate. The highly reflective metal layer has a thickness equal to or less than a wavelength of light from the light source unit, and is made of a material selected from a group including silver, gold, chrome, silicon, and germanium. In this embodiment, interaction between the polymer thin film and organic carbon in water is detected in accordance with one of a SPR method and a WG method.

The polymer thin film preferably has a thickness of 10 µm or less, more preferably 5 µm or less, and further preferably 3 µm or less. Desirably, the light source unit comprises a laser diode (LD) or a light emitting diode (LED), and the photo-detector is a photodiode or a phototransistor. An output of the photo-detector is applied to an electric circuit which generates a signal indicative of the concentration of a chemical substance in water.

In the present invention, the polymer thin film absorbs or adsorbs a chemical substance in water to directly respond to the chemical substance. As a result of such interaction, the polymer thin film exhibits a change in thickness and/or refractive index. Since such a physical change is related to the concentration of the chemical substance, the physical change can be measured in accordance with an optical approach such as an IER method, SPR method, waveguide mode method, or the like to derive the concentration of the chemical substance in water.

In the three optical methods, the concentration of the chemical substance in water may be measured as a function of the intensity of reflected light at a fixed detection angle. With the waveguide mode method, the concentration of the chemical substance is measured as a function of the reflectivity of the polymer thin film or an angular position of a waveguide mode.

### Brief description of the drawings

Fig. 1A generally illustrates the structure of a first embodiment of an optical sensor according to the present invention;
Fig. 1B is an enlarged cross-sectional view illustrating the structure of a detecting element in Fig. 1A;
Fig. 2 is a graph representing the relationship between the thickness and the reflectivity of a polymer thin film in the optical sensor illustrated in Fig. 1A;
Fig. 3A generally illustrates the structure of a second embodiment of the optical sensor according to the present invention;
Fig. 3B is an enlarged cross-sectional view illustrating the structure of a detecting element in Fig. 3A;
Fig. 4 is a graph representing the relationship between an incident angle of light emitting on the polymer thin film in the optical sensor of Fig. 3 and the reflectivity of the polymer thin film;
Fig. 5 is a graph representing the relationship between an incident angle of light emitting on the polymer thin film in the optical sensor of Fig. 3 and the reflectivity of the polymer thin film when the polymer thin film is forced to respond to 2-ppm toluene, for showing a shift of a resonance coupling angle of a waveguide mode TM₄;
Fig. 6 is a graph representing the relationship between an incident angle of light and the reflectivity of the polymer thin film derived for a specific example of the optical sensor illustrated in Fig. 3;
Fig. 7 is a graph showing how a response of an optical sensor having the same structure as the optical sensor of Fig. 3 varies over time for 4-ppm toluene in water;
Fig. 8 is a graph showing how a response of an optical sensor having the same structure as the optical sensor of Fig. 3 varies for a varying concentration of toluene in water;
Fig. 9 is a graph showing how a response of an optical sensor having the same structure as the optical sensor of Fig. 3 varies over time for 20-ppm toluene in water; and
Fig. 10 is a graph showing how the reflectivity of a polymer thin film used in an optical sensor having the same structure as the optical sensor of Fig. 1 changes in response as the concentration of toluene in water varies.

### Description of the preferred embodiments

A certain kind of polymer thin film (later described) exhibits a change in thickness and/or refractive index when a chemical substance such as organic carbon or the like is absorbed into or adsorbed on the polymer thin film. The present invention measures such a physical change of the polymer thin film to sense a chemical substance in water. Several embodiments of an optical sensor according to the present invention will hereinafter be described with reference to the accompanying drawings. It should be noted that in the drawings, the same or similar components are designated by the same reference numerals, and repetitive explanation thereof will be omitted.

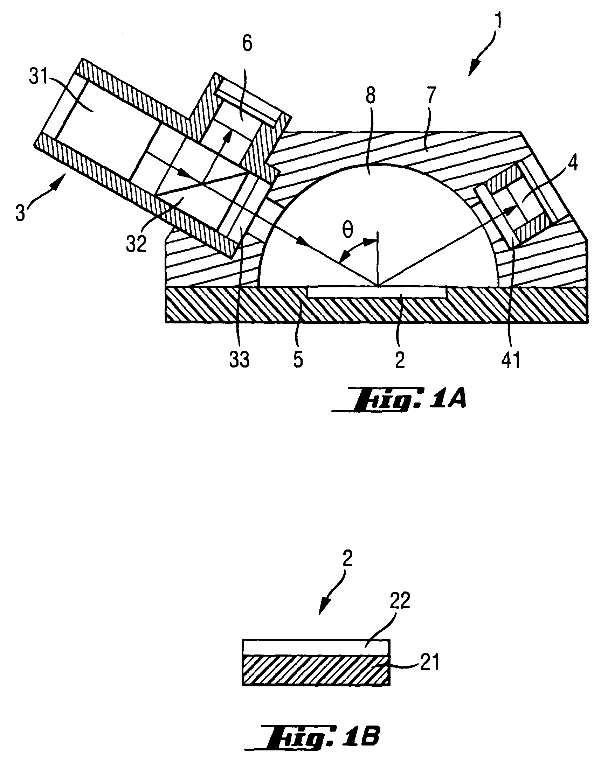

Fig. 1A generally illustrates the configuration of a first embodiment of an optical sensor according to the present invention, and Fig. 1B illustrates in an enlarged view a detector element used in the optical sensor. The sensor of the first embodiment relies on the IER method for detecting a chemical substance in water. Referring specifically to Fig. 1A, the optical sensor 1 comprises the detecting element 2; a light source unit 3 for emitting light such that the light is incident to the detector element 2 at an incident angle θ; and a first photo-detector 4 for detecting the intensity of light emitted from the light source unit 3 and reflected by a polymer thin film 22 of the detecting element 2.

The detecting element 2 is positioned on one surface of a base 5, and has a planar reflective substrate 21 and the polymer thin film 22 formed on the substrate 21 in contact with water, as illustrated in Fig. 1B. The reflective substrate 21 is preferably a substrate having a high reflectivity and may be, for example, mirror, semiconductor, metal, or a thin film of any metal material or any semiconductor material deposited on a low reflective substrate.

The light source unit 3 has a light source 31, a beam splitter 32, and a polarizing plate 33. The light source 31 may be a laser diode (LD) or a light emitting diode (LED) for emitting visual light or infrared rays. Light emitted from the light source 31 is split by the beam splitter 32 into two portions, one of which is polarized by the polarizing plate 33 and emits on the polymer thin film 33 of the detecting element 2. Light reflected from the polymer thin film 22 enters, through a window 41, the first photo-detector 4 which detects the intensity of received light. The other light portion split by the beam splitter 32 is directed to a second photo-detector 6 and transduced thereby into a signal representative of a reference light intensity.

The first photo-detector 4 and the second photo-detector 6 may be photodiodes or phototransistors. Outputs of these photo-detectors 4, 6 are transferred to an appropriate electronic circuit to calculate the ratio of the output of the first photo-detector 4 to the output of the second photo-detector 6. This ratio is used to generate a signal indicative of the concentration of a chemical substance to be detected.

The light source unit 3, the first photo-detector 4, and the second photo-detector 6 are mounted at appropriate locations in a housing 7. The housing 7 is mounted on the base 5 such that the housing 7 forms a water channel 8 with the base 5 and the polymer thin film 22 of the detecting element 2 is in contact with water in the water channel 8. The light passing through the polarizing plate 33 is preferably s-polarized light which has an electric field vector of the light perpendicular to an incident plane of the polymer thin film 22.

The IER method is utilized to detect a change in thickness and/or refractive index of the polymer thin film 22 in contact with water based on the fact that the intensity of light reflected from a thin dielectric film depends on the thickness of the dielectric film. The polymer thin film 22 exhibits a change in thickness and/or refractive index when it absorbs or adsorbs a chemical substance in water. Thus, when the polymer thin film 22 is irradiated with light from the light source unit 3, a change in thickness and/or refractive index of the polymer thin film 22 appears as a change in intensity of light reflected from the polymer thin film 22. It is therefore possible to measure the concentration of a chemical substance in water by measuring the intensity of the reflected light.

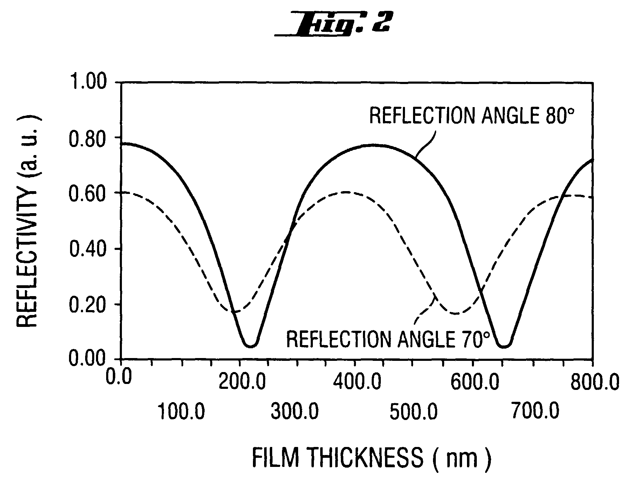

Fig. 2 illustrates a graph which represents the relationship between the thickness of the polymer thin film 22 of the detecting element 2 in the optical sensor 1 shown in Fig. 1A and the reflectivity of the polymer thin film 22 to s-polarized light incident thereto, when the polymer thin film 22 is formed on a silicon substrate and placed in water. In other words, the graph shows reflectivity curves derived in accordance with the IER method. A solid line indicates the reflectivity when the incident angle θ of the light is 80, and a broken line indicates the reflectivity when the incident angle θ is 70. In this event, the refractive index of the polymer thin film is 1.50.

Although the thickness of the polymer thin film 22 may be arbitrarily selected in a range of several nanometers (nm) - 10 micrometers (µm), the thickness is desirably set at a value away from minimum values of the reflectivity curves in Fig. 2 in order to appropriately detect the thickness of the polymer thin film 22 in accordance with the IER method. Also, it can be seen from the reflectivity curves of Fig. 2 that the reflectivity more largely modulates as the incident angle θ is larger (the reflectivity exhibits a larger change in response to a change in thickness). Thus, the incident angle θ is preferably 70 or more.

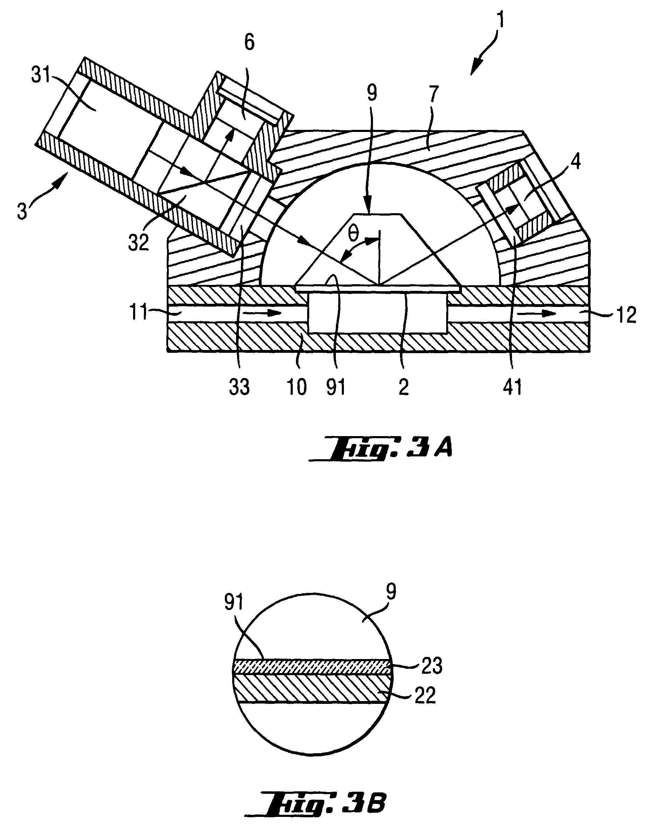

Fig. 3A generally illustrates the configuration of a second embodiment of the optical sensor according to the present invention, and Fig. 3B is an enlarged cross-sectional view illustrating the structure of a detecting element shown in Fig. 3A. The second embodiment differs from the first embodiment of Fig. 1 in that the second embodiment uses a polymer waveguide.

Referring specifically to Figs. 3A and 3B, a metal layer 23 is deposited on the bottom 91 of a prism 9, and a polymer thin film 22 serving as a polymer waveguide is formed on the metal layer 23 to complete a detecting element 2. The prism 9 is mounted on a flow cell 10 having a water flow inlet 11 and a water flow outlet 12 such that the polymer thin film 22 faces water passing through the flow cell 10. Light emitted from a light source unit 3 and polarized by a polarizing plate 33 is incident to the bottom 91 of the prism 9 at an angle larger than an internal total reflection angle of the prism 9, and the intensity of light reflected by the bottom 91 is measured by a first photo-detector 4. The metal layer 23 has a thickness equal to or less than the wavelength of the light emitted from a light source 31, and preferably made of silver, gold, chrome, silicon, or germanium.

When the light emitted from the light source 31 is totally reflected by the bottom 91 of the prism 9, evanescent waves are produced and light waves in a waveguide mode are excited by the evanescent waves. Such excitation of the waveguide mode in the polymer thin film 22, i. e., optical coupling is the strongest at the incident angle at which a tangential component of an evanescent wave vector on the bottom 91 of the prism 9 is equal to a wave vector of the light waves in the waveguide mode. Thus, under such a condition, the energy of incident light from the light source 31 transitions to light waves in the waveguide mode internal to the polymer thin film 22, whereby the intensity of light reflected from the metal layer 23 is abruptly decreased.

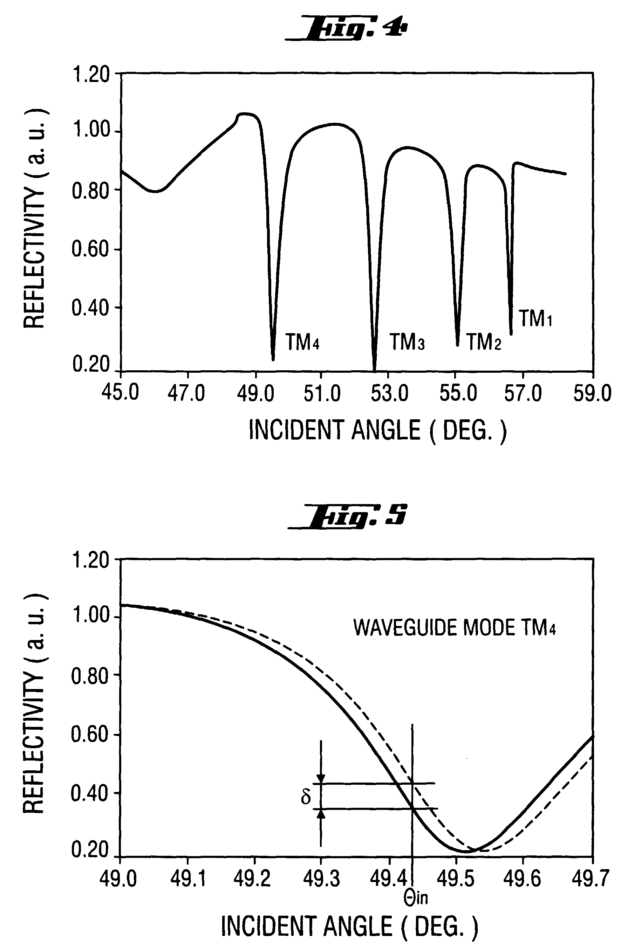

Thus, when the reflectivity of the polymer thin film 22 is measured while varying the incident angle θ of the light from the light source 31, excitation of light waves in the waveguide mode can be recognized as abrupt attenuation of a curve representing the reflectivity at a certain resonance coupling angle. Fig. 4 is a graph of values measured in an experiment for showing changes in reflectivity of the polymer thin film 22 with respect to an incident angle θ of light emitting on the detecting element 2 comprising a poly(octadecyl methacrylate-co-glycidyl methacrylate) layer (hereinafter referred to as "poly(ODMA-co-GLMA)") of 2 µm in thickness. In the curve illustrated in Fig. 4, four waveguide modes TM₁, TM₂, TM₃, TM₄ can be recognized. The poly(ODMA-co-GLMA) layer may be spin coated on the surface of a gold layer having a thickness of approximately 50 nm vapor-deposited on the bottom of a rectangular prism made of SF11 glass (the refractive index of which is 1.7780 at wavelength of 632.8 nm). Since the poly(ODMA-co-GLMA) layer has a refractive index of approximately 1.46 in water, which is larger than those of water and gold, the poly(ODMA-co-GLMA) layer functions as a waveguide.

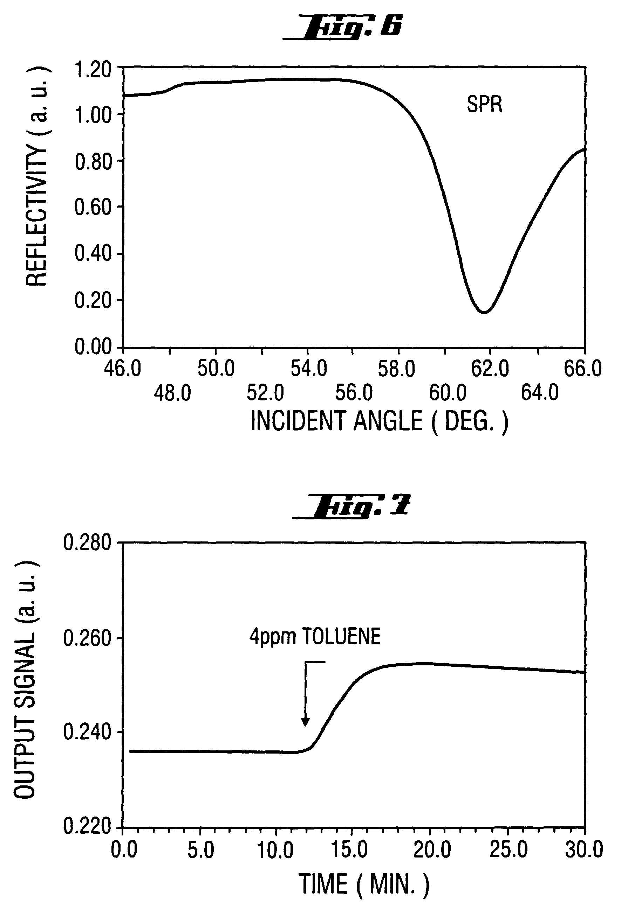

When the polymer thin film 22 responds to a chemical substance in water, i. e., absorbs or adsorbs the chemical substance, the polymer thin film 22 exhibits a change in thickness and/or refractive index to cause a shift of a resonance coupling angle at which a certain waveguide mode is excited. Such a shift of angle is a function of the concentration of the chemical substance. Thus, the concentration of a chemical substance in water can be sensed by measuring a shift of the resonance coupling angle associated with a certain waveguide mode. Fig. 5 is a graph representing a shift of the resonance coupling angle associated with the waveguide mode TM₄ (Fig. 4) when the polymer thin film 22 responds to toluene in concentration of 2 ppm, resulted in a change δ of reflectivity. Specifically, a solid line represents the relationship between an incident angle of light emitting on the polymer thin film 22 and the reflectivity of the polymer thin film 22 when the concentration of toluene is 0 ppm, while a broken line represents the relationship between the incident angle and the reflectivity after the polymer thin film 22 has responded to toluene in concentration of 2 ppm.

Instead of measuring a shift of the resonance coupling angle, the concentration of a chemical substance in water can be sensed by fixing an incident angle θ of light from the light source 31 at one side of the waveguide mode resonance and measuring a change in intensity of light reflected from the detecting element 2. Since the resonance is quite sharp, even a very small shift of the resonance coupling angle appears as a large change in reflectivity.

For supporting at least one waveguide mode, the polymer thin film 22 illustrated in Fig. 3 must have a sufficient thickness. For example, a cutoff thickness of the polymer thin film 22 having a refractive index of 1.45 in water is approximately 284 nm in order for the polymer thin film 22 to have a TE₀ mode. When the thickness of the polymer thin film 22 is equal to or less than the cutoff thickness, any waveguide mode cannot exist in the polymer thin film 22. It is however possible to observe a different phenomenon referred to as "surface plasmon resonance" (hereinafter abbreviated as "SPR").

The surface plasmon is plasma oscillation of free electrons existing on the boundary of a metal. This plasma oscillation is affected by the refractive index of a substance proximate to a surface of a metal. For example, when p-polarized light is incident to the bottom 91 of the prism 9 in the optical sensor constructed as illustrated in Fig. 3 and evanescent waves are produced by internal total reflection, surface plasma oscillation can be excited. The plasma oscillation is excited at an incident angle θ at which a tangential component of an evanescent wave vector on the bottom 91 of the prism 9 matches a wave vector of plasma waves on an interface opposing to the polymer thin film 22 (i. e., on the interface with the substrate) with respect to the metal layer 23. In this event, the energy of the incident light is transferred to plasma waves to cause the intensity of reflected light to abruptly attenuate. This phenomenon is the surface plasmon resonance (SPR). The position of the resonance coupling angle of SPR largely depends on the refraction of the polymer thin film on the surface of the metal layer, so that the SPR method may also be unitized to sense a chemical substance in water.

When the reflectivity to total internal reflected light is measured while varying an incident angle θ of incident light, the SPR can be experimentally observed as abrupt attenuation of the reflectivity at a certain resonance coupling angle. As an example of observed SPR, Fig. 6 illustrates a reflectivity curve (SPR curve) showing how the reflectivity of the polymer thin film used in the optical sensor illustrated in Fig. 3 varies with respect to an incident angle θ when the optical sensor comprises a poly(ODMA-co-GLMA) layer having a thickness of 107 nm which is spin coated on the surface of a gold layer having a thickness of 50 nm vapor-deposited on the bottom of a rectangular prism made of SF11 glass (the refractive index of which is 1.7780 at wavelength of 632.8 nm).

Another optical sensor having the structure illustrated in Fig. 3 and relying on the SPR method can also be realized. While this optical sensor is also irradiated with p-polarized light, the polymer thin film should be as thin as possible, and preferably has a thickness in a range between several nanometers and several hundreds of nanometers. This is because the surface plasmon is a surface phenomenon and is sensitive to a change which may occur at a position several nanometers to several hundreds of nanometers away from the surface of the metal layer. When the polymer thin film absorbs or adsorbs a chemical substance in water and swells to cause a change in thickness and/or refractive index, the resonance coupling angle of SPR is shifted. It is therefore possible to sense the concentration of the chemical substance in water by measuring a shift of the resonance coupling angle of SPR or by measuring a change in intensity of light reflected from the polymer thin film with an incident angle of light from the light source being fixed at the near resonance coupling angle of SPR.

Since a change in thickness and/or refractive index of the polymer thin film is also affected by a change in temperature around the polymer thin film, the results of detection derived by the optical sensor according to the present invention vary depending on the ambient temperature. For this reason, temperature control techniques or temperature compensation techniques are required for highly sensitive measurements. Specifically, a method using a temperature controlled housing, a method using a temperature sensor capable of generating a temperature compensation signal, a means comprising a plurality of channel elements using polymer thin films sensitive to temperature, and so on may be applied to such temperature control/compensation techniques.

Furthermore, the optical sensor according to the present invention may comprise a plurality of detecting elements to measure the concentration of a mixture of a plurality of chemical substances in water. To achieve an optical sensor capable of measuring the concentration of a mixture, the following options are possible:
(1) Use of a polymer thin film which has a low or small response to a plurality of kinds of chemical substances in water;
(2) Use of a plurality of polymer thin films, each of which is selectively responsive to a different kind of chemical substance in water. Responses derived from these polymer thin films are combined to output a signal indicative of the concentration of a mixture composed of a plurality of chemical substances in water;
(3) Use of a plurality of polymer thin films, each of which exhibits a different response to the same or different chemical substance in water. Responses derived from these polymer thin films are combined to output a signal indicative of the concentration of a mixture composed of a plurality of chemical substances in water; and
(4) Use of one or a plurality of the above methods in combination of an optical approach such as the IER method, SPR method, WG method, or the like, to output a signal indicative of the concentration of a mixture composed of a plurality of chemical substances in water.

In addition, known pattern recognition techniques such as matrix analysis, neural network analysis, or the like may be applied together with an optical sensor having a plurality of channels in order to accurately determine a total amount of chemical substances, the concentration of each chemical substance, or the concentrations of chemical substances.

Materials for the polymer thin film 22 used in the optical sensor according to the present invention preferably include a homopolymer or copolymer having a recurring unit represented by the following chemical formula (I): 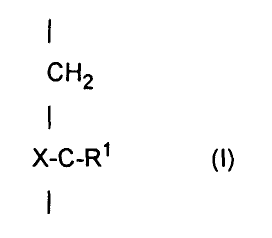
where X represents -H, -F, -Cl, -Br, -CH₃, -CF₃, -CN, or -CH₂-CH₃;
R² represents -R² or -Z-R²;
Z represents -O-, -S-,-NH-, -NR²'-, -(C=Y)-, -(C=Y)-Y-, -Y-(C=Y)-, -(SO₂)-, -Y'-(SO₂)-, -(SO₂)-Y'-, -Y'-(SO₂)-Y'-, -NH-(C=O)-, -(C=O)-NH-, -(C=O)-NR²'-, -Y'-(C=Y)-Y'-, or -O-(C=O)-(CH₂)n-(C=O)-O-;
Y represents the same or different O or S;
Y' represents the same or different O or NH;
n represents an integer ranging from 0 to 20; and
R² and R²' represent the same or different hydrogen, a linear alkyl group, a branched alkyl group, a cycloalkyl group, an un-saturated hydrocarbon group, an aryl group, a saturated or un-saturated hetero ring, or substitutes thereof. It should be noted that R¹ does not represent hydrogen, a linear alkyl group, or a branched alkyl group.

In the formula, X is preferably H or CH₃; R¹ is preferably a substituted or non-substituted aryl group or -Z-R²; Z is preferably -O-, -(C=O)-O-, or -O-(C=O)-; R² is preferably a linear alkyl group, a branched alkyl group, a cycloalkyl group, an un-saturated hydrocarbon group, an aryl group, a saturated or un-saturated hetero ring, or substitutes thereof.

A polymer used as the polymer thin film 22 for the present invention may be a polymer consisting of a single recurring unit (I), a copolymer consisting of another recurring unit and the above-mentioned recurring unit (I), or a copolymer consisting of two or more species of the recurring unit (I). The recurring units in the copolymer may be arranged in any order, and a random copolymer, an alternate copolymer, a block copolymer or a graft copolymer may be used by way of example. Particularly, the polymer thin film 22 is preferably made from polymethacrylic acid esters or polyacrylic acid esters. The side-chain group of the ester is preferably a linear or branched alkyl group, or a cycloalkyl group with the number of carbon molecules ranging preferably from 4 to 22.

Polymers particularly preferred for the polymer thin film 22 are listed as follows:
poly(dodecyl methacrylate);
poly(isodecyl methacrylate);
poly(2-ethylhexyl methacrylate);
poly(2-ethylhexyl methacrylate-co-methyl methacrylate);
poly(2-ethylhexyl methacrylate-co-styrene);
poly(methyl methacrylate-co-2-ethylhexyl acrylate);
poly(methyl methacrylate-co-2-ethylhexyl methacrylate);
poly(isobutyl methacrylate-co-glycidyl methacrylate);
poly(cyclohexyl methacrylate);
poly(octadecyl methacrylate);
poly(octadecyl methacrylate-co-styrene);
poly(vinyl propionate);
poly(dodecyl methacrylate-co-styrene);
poly(dodecyl methacrylate-co-glycidyl methacrylate);
poly(butyl methacrylate);
poly(butyl methacrylate-co-methyl methacrylate);
poly(butyl methacrylate-co-glycidyl methacrylate);
poly(2-ethylhexyl methacrylate-co-glycidyl methacrylate);
poly(cyclohexyl methacrylate-co-glycidyl methacrylate);
poly(cyclohexyl methacrylate-co-methyl methacrylate);
poly(benzyl methacrylate-co-2-ethylhexyl methacrylate);
poly(2-ethylhexyl methacrylate-co-diacetoneacrylamide);
poly(2-ethylhexyl methacrylate-co-benzyl methacrylate-co-glycidyl methacrylate);
poly(2-ethylhexyl methacrylate-co-methyl methacrylate-co-glycidyl methacrylate);
poly(vinyl cinnamate) poly(butyl methacrylate-co-methacrylate);
poly(vinyl cinnamate-co-dodecyl methacrylate);
poly(tetrahydrofurfuryl methacrylate);
poly(hexadecyl methacrylate);
poly(2-ethylbutyl methacrylate);
poly(2-hydroxyethyl methacrylate);
poly(cyclohexyl methacrylate-co-isobutyl methacrylate);
poly(cyclohexyl methacrylate-co-2-ethylhexyl methacrylate);
poly(butyl methacrylate-co-2-ethylhexyl methacrylate);
poly(butyl methacrylate-co-isobutyl methacrylate);
poly(cyclohexyl methacrylate-co-butyl methacrylate);
poly(cyclohexyl methacrylate-co-dodecyl methacrylate);
poly(butyl methacrylate-co-ethyl methacrylate);
poly(butyl methacrylate-co-octadecyl methacrylate);
poly(butyl methacrylate-co-styrene);
poly(4-methyl styrene);
poly(cyclohexyl methacrylate-co-benzyl methacrylate);
poly(dodecyl methacrylate-co-benzyl methacrylate);
poly(octadecyl methacrylate-co-benzyl methacrylate);
poly(benzyl methacrylate-co-benzyl methacrylate);
poly(benzyl methacrylate-co-tetrahydrofurfuryl methacrylate);
poly(benzyl methacrylate-co-hexadecyl methacrylate);
poly(dodecyl methacrylate-co-methyl methacrylate);
poly(dodecyl methacrylate-co-ethyl methacrylate);
poly(2-ehtylhexyl methacrylate-co-dodecyl methacrylate);
poly(2-ethylhexyl methacrylate-co-octadecyl methacrylate);
poly(2-ethylbutyl methacrylate-co-benzyl methacrylate);
poly(tetrahydrofurfuryl methacrylate-co-glycidyl methacrylate);
poly(styrene-co-octadecyl acrylate);
poly(octadecyl methacrylate-co-glycidyl methacrylate);
poly(4-methoxystyrene);
poly(2-ethylbutyl methacrylate-co-glycidyl methacrylate);
poly(styrene-co-tetrahydrofurfuryl methacrylate);
poly(2-ethylhexyl methacrylate-co-propyl methacrylate);
poly(octadecyl methacrylate-co-isopropyl methacrylate);
poly(3-methyl-4-hydroexystyrene-co-4-hydroxystyrene);
poly(styrene-co-2-ethylhexyl methacrylate-co-glycidyl methacrylate);

It should be noted that in the methacrylate ester polymers or copolymers listed above, acrylate may be substituted for methacrylate. The polymers may be crosslinked on their own, or they may be crosslinked by introducing a compound that has crosslinking reactive groups. Suitable crosslinking reactive groups include, for example, an amino group, a hydroxyl group, a carboxyl group, an epoxy group, a carbonyl group, a urethane group, and derivatives thereof. Other examples include maleic acid, fumaric acid, sorbic acid, itaconic acid, cinnamic acid, and derivatives thereof. Materials having chemical structures capable of forming carbene or nitrene by irradiation of visible light, ultraviolet light, or high energy radiation may also be used as crosslinking agents. Since a film formed from crosslinking polymer is insoluble, the polymer forming the polymer thin film of the sensor may be crosslinked to increase the stability of the sensor. The crosslinking method is not particularly limited, and methods utilizing irradiation of light or radioactive rays may be used in addition to known crosslinking methods, for example, a heating method.

### Specific Examples

Several specific examples of the optical sensor according to the present invention will be described below.

### Specific Example 1

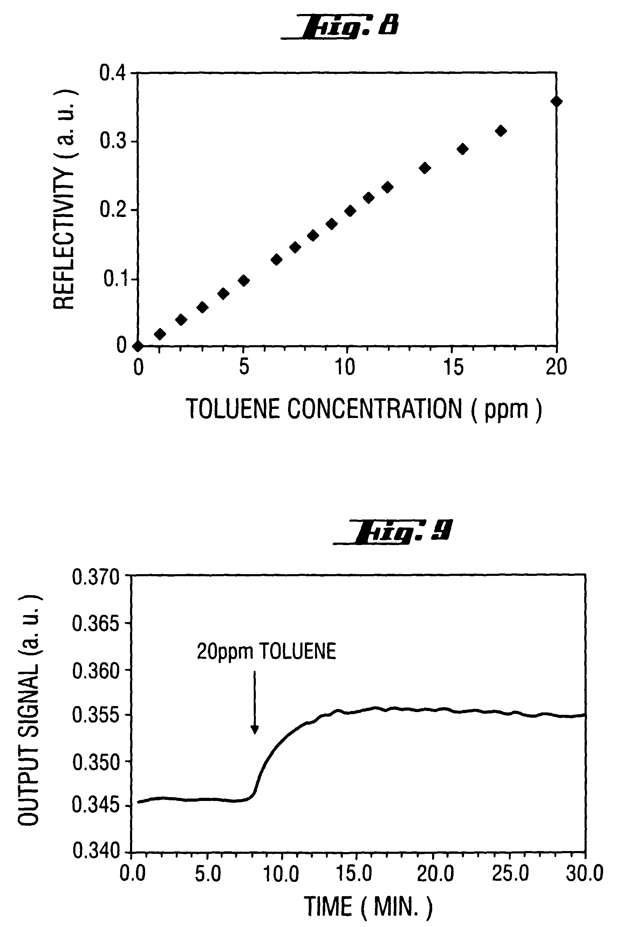

Fig. 7 is a graph showing how a response of an optical sensor having the structure illustrated in Fig. 3 varies over time when the concentration of toluene in water is 4 ppm. An employed detecting element comprised a poly(ODMA-co-GLMA) layer of 2 µm in thickness which was spin coated on a gold layer of 50nm in thickness deposited on the bottom of a rectangular prism made of SF11 glass. A laser diode emitting light at wavelength of 670 nm was used for a light source. Light from the laser diode was split into a reference beam and measuring beam. The reference beam was directed to a silicon photodiode for reference, while the measuring beam was passed through a polarizing plate and directed to the bottom of the rectangular prism as p-polarized light. An incident angle of the measuring beam was set at a smaller angle of resonance in the TM₄ waveguide mode illustrated in Fig. 5. When the intensity of the measuring beam reflected by the bottom of the prism was measured by a silicon photodiode for measurement, four waveguide modes were observed as illustrated in Fig. 4.

Outputs of the two photodiodes for reference and for measurement were supplied to an electronic divider to calculate the ratio of the output of the photodiode for measurement to the output of the photodiode for reference. The calculated ratio was supplied to an electric circuit to generate an output signal indicative of a response of the optical sensor. The result of the measurement revealed that for detecting toluene in water, a detection limit was lower than the concentration at 1 ppm and a 90 % response time (a time required to reach a complete response) was within three minutes.

### Specific Example 2

Fig. 8 shows how the response of the same optical sensor used in Specific Example 1 varies as the concentration of toluene in water changes. It should be noted that the response from the optical sensor was measured in the form of a change in reflectivity with respect to a change in concentration of toluene. The measurement revealed that the optical sensor nearly responded to toluene in water in concentration ranging from 0 to 20 ppm.

### Specific Example 3

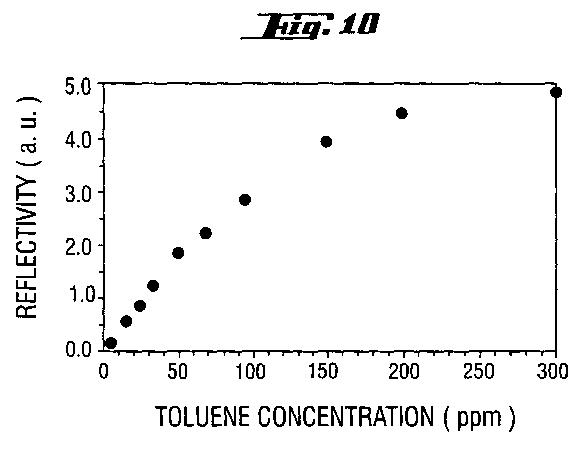

Fig. 9 is a graph showing how an output signal of the same optical sensor used in Specific Example 1 varies over time when the concentration of toluene in water is 20 ppm. The optical sensor used in this measurement employed a polymer thin film formed of a poly(ODMA-co-GLMA) layer of 107 nm in thickness and a helium-neon laser at wavelength of 632.8 nm for the light source. Surface plasmon resonance was observed as illustrated in Fig. 6 by the use of the polymer thin film of 107 nm in thickness.

An incident angle of a measuring beam, i. e., p-polarized light to the bottom of a prism was 60.82 which was rather a small incident angle in Fig. 6 illustrating the resonance coupling angle in the SPR method. As the output signal of the optical sensor was recorded as a function of time, the output signal increased in response to toluene in concentration of 20 ppm, and a 90% response time was approximately 3 minutes.

### Specific Example 4

The optical sensor having the structure illustrated in Fig. 1 was used to measure toluene in concentration ranging from 0 to 300 ppm in water in accordance with the IER method. A detecting element had a poly(ODMA-co-GLMA) layer of 1.95 µm in thickness spin-coated on a silicon substrate, and was mounted in a housing as illustrated in Fig. 1. Water was introduced into the housing by suction. A laser diode for emitting light at wavelength of 670 nm was employed for a light source. Light from the laser diode was divided into a reference beam and a measuring beam. The measuring beam was passed through a polarizing plate to be linearly polarized s-polarized light which was incident to the polymer thin film at an incident angle of 80 through a glass window.

The intensity of the measuring beam reflected by the polymer thin film was measured by a silicon photodiode for measurement, while the intensity of the reference beam was measured by a silicon photodiode for reference. Outputs of these two silicon photodiodes were supplied to an electronic divider to calculate the ratio of the output of the silicon photodiode for reference to the output of the silicon photodiode for measurement. The calculated ratio was used to generate an output signal by an appropriate electric circuit. Fig. 10 illustrates the reflectivity measured by the optical sensor in Specific Example 4 which is plotted as a function of the concentration of toluene in water. It can be seen from Fig. 10 that the response of the optical sensor is not linear in the range of 0 - 300 ppm.

### Specific Example 5

It is desirable that a polymer thin film has response to as many kinds of chemical substances under detection, i. e., DOC as possible for detecting DOC in water. The optical sensor used in Specific Example 1 having a poly(ODMA-co-GLMA) layer of 2 µm in thickness was used to measure a large number of different kinds of DOC in water. The results of the measurements are listed in the following table. In the table, "Sensitivity" is a value representing a change in reflectivity in percent, and "time" represents a 90 % response time.

**Table 1**

| Organic Compound | Concentration (ppm) | Sensitivity | Time (Minute) |
|---|---|---|---|
| toluene C₇H₈ | 2 | 41.72 | 6 |
| benzene C₆H₆ | 2 | 10.34 | 4 |
| chlorobenzene C₆H₅Cl | 2 | 87.07 | 9 |
| nitrobenzene C₆H₅NO₂ | 2 | 23.28 | 1,5 |
| P-xylene C₈H₁₀ | 2 | 126.86 | 15 |
| chloroform CHCl₃ | 2 | 8.71 | 3 |
| carbon tetrachloride CCl₄ | 2 | 21.55 | 11.5 |
| 1,2-dichloroethane CH₂CH₂Cl | 2 | 6.03 | 1.5 |
| dichloromethane CH₂Cl₂ | 2 | 1.38 | 1 |
| diethyl ether C₄H₁₀O | 100 | 11.21 | 1.5 |
| tetrahydrohuran O(CH₂)₄ | 100 | 9.48 | 1 |
| acetone C₃H₆ | 500 | 8.62 | 1 |
| propanol C₃H₈O | 500 | 6.03 | 1 |
| methanol CH₄O | 500 | 0.00 | |
| acetic acid C₂H₄O₂ | 500 | 3.45 | <1 |
| hydrochloric acid HCl | 2000 | 25 | <1 |
| sulfuric acid H₂SO₄ | 2000 | 6.67 | <1 |

It can be seen from Table 1 that the sensitivity and response time of the optical sensor vary depending on the kind of DOC to be detected. A multi-channel system comprising an array of detecting elements or an array of polymer thin films is therefore necessary to detect a large number of DOC in variety of industrial applications and environment protecting applications. In addition, known pattern recognition techniques such as matrix analysis, neural network analysis, or the like may be applied together with such a multi-channel system in order to accurately determine a total amount of DOC, the concentration of each DOC, or the concentrations of a DOC group.

The pattern recognition techniques applicable to the detection of chemical substances in water using the optical sensor of the present invention are described in an article entitled "Detection of Hazardous Vapors Including Mixtures Using Pattern Recognition Analysis of Responses from Surface Acoustic Wave Device" by Susan L. Rosepehrsson et al. published in "Anal. Chem.", 1088, 60, pp 2801 - 2811; an article entitled "Development of Odorant Sensor Using SAW Response Oscillator Incorporating Odorant-Sensitive LB Films and Neural-Network Pattern Recognition Scheme" by Sang-Mok Chang et al, published in "Sensors and Materials", Vol. 1 (1995), pp 013 - 022; an article entitled "Polymer-based sensor arrays and multicomponent analysis for the detection of hazardous organic vapors in the environment" by Andreas Hierlemann et al. published in "Sensors and Actuators B" 26-27 (1995), pp 126 - 134; and so on.

As will be apparent from several embodiments and specific examples of the present invention described above in detail, the optical sensor according to the present invention is advantageous over the optical fiber sensor referred to in "Description of the Related Art" in that it directly detects a change in thickness and/or refractive index of a polymer thin film resulting from interaction with a chemical substance in accordance with an optical approach such as the IER method, WG method, SPR method, or the like, so that even a trace of change in thickness and/or refractive index can be detected with a high sensitivity. In addition, since the polymer thin film can be readily formed by an ordinary method such as spin coating, the optical sensor itself can be readily manufactured.

## Claims

1. An optical sensor for directly detecting a chemical substance dissolved or dispersed in water comprising:
a detecting element having a polymer thin film capable of interacting with said chemical substance;
a light source unit for emitting light for irradiating said polymer thin film; and
a photo-detector for detecting the intensity of light reflected from said polymer thin film.

2. An optical sensor according to claim 1, wherein said chemical substance is organic carbon.

3. An optical sensor according to claim 1 or 2, wherein said polymer thin film is formed on a highly reflective substrate, and interaction between said polymer thin film and said organic carbon in water is detected in accordance with an IER method.

4. An optical sensor according to claim 1 or 2, wherein said polymer thin film is formed on a highly reflective metal layer deposited on a transparent substrate, said highly reflective metal layer having a thickness equal to or less than a wavelength of light from said light source unit, said highly reflective metal layer being made of a material selected from a group including silver, gold, chrome, silicon, and germanium, and interaction between said polymer thin film and organic carbon in water is detected in accordance with one of a SPR method or a WG method.

5. An optical sensor according to any of claims 1 - 4, wherein said polymer thin film has a thickness equal to or less than 10 µm.

6. An optical sensor according to any of claims 1 - 5, wherein said polymer thin film is made of homopolymer or copolymer having a recurring unit represented by the following chemical formula (I): 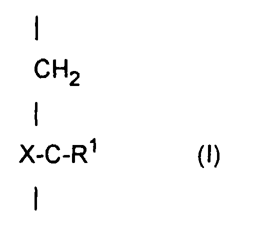
where X represents -H, -F, -Cl, -Br, -CH₃, -CF₃, -CN, or -CH₂-CH₃;
R¹ represents -R² or -Z-R²;
Z represents -O-, -S-,-NH-, -NR²'-, -(C=Y)-, -(C=Y)-Y-, -Y-(C=Y)-, -(SO₂)-, -Y'-(SO₂)-, -(SO₂)-Y'-, -Y'-(SO₂)-Y'-, -NH-(C=O)-, -(C=O)-NH-, -(C=O)-NR²'-, -Y'-(C=Y)-Y'-, or -O-(C=O)-(CH₂)n-(C=O)-O-;
Y represents the same or different O or S;
Y' represents the same or different O or NH;
n represents an integer ranging from 0 to 20; and
R² and R²' represent the same or different hydrogen, a linear alkyl group, a branched alkyl group, a cycloalkyl group, an un-saturated hydrocarbon group, an aryl group, a saturated or unsaturated hetero ring, or substitutes thereof, said R¹ not representing hydrogen, a linear alkyl group, or a branched alkyl group,
wherein X is preferably H or CH₃; R¹ is preferably a substituted or non-substituted aryl group or -Z-R²; Z is preferably -O-, -(C=O)-O-, or -O-(C=O)-; R² is preferably a linear alkyl group, a branched alkyl group, a cycloalkyl group, an un-saturated hydrocarbon group, an aryl group, a saturated or un-saturated hetero ring, or substitutes thereof.

7. An optical sensor according to claim 6, wherein said polymer thin film is made of a material comprising polymer or copolymer of methacrylic acid esters or polyacrylic acid esters.

8. An optical sensor according to any of claims 1 - 7, further comprising an electric circuit coupled to receive an output of said photo-detector for generating a signal indicative of the concentration of said organic carbon.
